# EUROPÄISCHE PATENTSCHRIFT

(11) **EP 3 599 510 B1**
(45) Veröffentlichungstag und Bekanntmachung des Hinweises auf die Patenterteilung: **06.03.2024**
(21) Anmeldenummer: 19187622.6
(22) Anmeldetag: 22.07.2019
(51) Int. Cl.: F16L 55/28, G01C 7/06, G01N 21/954, G03B 37/00

(54) **HOHLRAUMINSPEKTIONSSYSTEM**
HOLLOW AREA INSPECTION SYSTEM
SYSTÈME D'INSPECTION DE CAVITÉS

(30) Priorität: 23.07.2018 DE 102018212216
(43) Veröffentlichungstag der Anmeldung: 29.01.2020
(73) Patentinhaber: IBAK Helmut Hunger GmbH & Co. KG, 24148 Kiel (DE)
(72) Erfinder: Böttcher, Marcus, 24148 Kiel (DE)
(74) Vertreter: Patentanwälte Hemmer Lindfeld Frese Partnerschaft mbB

(56) Entgegenhaltungen:
- DE-A1-102010 044 465
- DE-A1-102013 211 795
- DE-U1- 9 209 821
- DE-U1- 20 308 761
- DE-U1-202013 100 437
- US-A1- 2008 021 662
- Jan Waschnewski: "Automatische Zustandsanalyse von Abwasserkanälen durch virtuelle Begehung - Vorstellung des BMBF-Projektes AUZUKA -", , 18 July 2017 (2017-07-18), pages 1-14, XP055723803, Retrieved from the Internet: URL:https://www.kompetenz-wasser.de/wp-con tent/uploads/2017/08/170713_ww42_waschnews ki.pdf [retrieved on 2020-08-19]
- Thomas Werner: "Roboter, Rost und Rohrbruch Robotik und neuronale Netze sichern kritische Infrastrukturen", InnoVisions, 31 March 2017 (2017-03-31), pages 1-2, XP055723808, Retrieved from the Internet: URL:https://www.fraunhofer-innovisions.de/ maschinelles-lernen/roboter-rost-und-rohrb ruch/ [retrieved on 2020-08-19]
- Jt-Elektronik: "AUZUKA - Ein BMBF-Projekt mit sehr interessantem Messeauftritt", Kanalinspekteure.de, 26 June 2018 (2018-06-26), pages 1-4, XP055723812, Retrieved from the Internet: URL:https://www.kanalinspekteure.de/index. php?/technik.html/records/auzuka-ein-bmbf- projekt-mit-sehr-interessantem-messeauftri tt-r30/ [retrieved on 2020-08-19]
- Anonymous: "BMBF-Projekt AUZUKA auf der IFAT vorgestellt", 3R, 2 July 2018 (2018-07-02), pages 1-4, XP055723814, Retrieved from the Internet: URL:https://www.3r-rohre.de/aktuell/aus-de r-praxis/02-07-2018-bmbf-projekt-auzuka-au f-der-ifat-vorgestellt/ [retrieved on 2020-08-19]
- THOMAS WERNER ET AL: "Projekt AUZUKA", JT-ELEKTRONIK NEWSLETTER 10/2018, 1 October 2018 (2018-10-01), XP055753658,

## Beschreibung

Die Erfindung betrifft ein Hohlrauminspektionssystem, insbesondere ein Hohlrauminspektionssystem zur Inspektion und/oder Bearbeitung von Kanalrohren und Schächten.

Hohlrauminspektionssysteme sind beispielsweise in Form von Kanalrohrinspektionssystemen bzw. Kanalrohrrobotern bekannt, welche dazu genutzt werden, Kanalrohre zu inspizieren und ggf. zu sanieren. Derartige Kanalrohrroboter werden üblicherweise von außerhalb des Kanalrohrs angeordneten Steuerständen gesteuert, über welche die Kanalrohrroboter an gewünschte Positionen bewegt werden können und Kameras in den Systemen gesteuert werden können, um gezielt bestimmte Stellen im Kanalrohr betrachten zu können. Solche Stellen sind insbesondere Schadstellen. Alternativ oder zusätzlich können auch Bearbeitungswerkzeuge wie Fräser bewegt werden, um Bearbeitungsvorgänge durchzuführen.

DE 20 2013 100 437 U1 offenbart eine Vorrichtung zur Abstandsmessung in Rohrleitungen. Die Vorrichtung weist dazu eine lichtemittierende Diode auf, welche einen Lichtstrahl aussendet. Der reflektierte Lichtstrahl wird erfasst und über ein Triangulationsverfahren wird ein Abstand berechnet.
DE 203 08 761 U1 offenbart einen Kanalfahrwagen zur Untersuchung von Kanalrohren mit einer Lichtquelle, welche dazu ausgebildet ist, Markierungen an der Innenwand des Kanalrohrs zu erzeugen, die im Videobild erfasst werden und dazu genutzt werden können, Deformationen des Kanalrohres festzustellen.
DE 10 2013 211 795 A1 offenbart eine Detektorvorrichtung zum Erkennen von verborgenen Strukturen in Kanalwandungen, bei welcher mit Hilfe einer Sendeantenne elektromagnetische Signale erzeugt werden. Diese werden ausgewertet und anhand der Signale können insbesondere verschlossene Abzweige erkannt werden.
US 2008/0021662 A1 offenbart ein Kanalrohrinspektionssystem, welches zwei Kameras aufweist, eine mit einer ausreichend hohen Auflösung zum Erzeugen eines Videobildes zum Betrachten des Kanalrohres und eine Kamera mit geringerer Auflösung, deren Bild ausgewertet wird, um mit Hilfe mathematischer Funktionen Kanten zu erkennen.

Es ist Aufgabe der Erfindung ein Hohlrauminspektionssystem dahingehend zu verbessern, dass Untersuchungs- und/oder Bearbeitungsvorgänge in einem zu untersuchenden Hohlraum auf vereinfachte Weise durchgeführt werden können.

Diese Aufgabe wird gelöst durch ein Hohlrauminspektionssystem mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Hohlrauminspektionssystem ist zur Untersuchung und/oder Bearbeitung von Hohlräumen, wie beispielsweise von Schächten oder Rohrleitungen, insbesondere Kanalrohren, ausgebildet. Das erfindungsgemäße Hohlrauminspektionssystem weist eine zum Einführen in einen Hohlraum ausgebildete Inspektionseinheit auf. Diese Inspektionseinheit weist zumindest eine Sensoreinrichtung in Form einer Kamera auf, mit deren Hilfe das Innere des Hohlraums analysiert und betrachtet werden kann. Die Sensoreinrichtung ist zum Erfassen einer Gestalt, d. h. zum Beispiel des Aussehens und/oder der Geometrie einer Wandung des Hohlraumes ausgebildet. Dazu können z. B. von der Sensoreinrichtung erzeugte Daten, wie beispielsweise ein von der Kamera aufgenommenes Bild über eine geeignete Kommunikationsverbindung zu einem außerhalb des Hohlraums gelegenen Steuerstand übertragen werden. Zusätzlich ist auch eine Aufzeichnung und spätere Auswertung oder Betrachtung möglich. Das Hohlrauminspektionssystem weist darüber hinaus eine Steuereinrichtung auf, welche zum Steuern der Inspektionseinheit dient und ausgebildet ist. Diese Steuereinrichtung weist eine mit der Sensoreinrichtung verbundene Auswerteeinrichtung auf. Während es sich bei der Sensoreinrichtung um eine Kamera handelt, ist die Auswerteeinrichtung als Bildauswerteeinrichtung ausgebildet. Die Auswerteeinrichtung ist dazu ausgebildet, von der Sensoreinrichtung ausgegebene Daten bzw. Informationen automatisiert auszuwerten. Die Auswerteeinrichtung wird dazu bevorzugt von einem Computersystem, beispielsweise einer geeigneten Software, welche auf einem Computersystem ausgeführt wird, gebildet.

Erfindungsgemäß ist vorgesehen, dass die Auswerteeinrichtung ein Strukturerkennungsmodul aufweist. Dieses Strukturerkennungsmodul dient dazu, automatisiert in einer von der Sensoreinrichtung erfassten Gestalt, d.h. in von einer Kamera aufgenommenen Bildern, bestimmte Strukturen, z. B. in einer Wandung des Hohlraumes, zu erkennen. Solche Strukturen können beispielsweise Schadstellen wie Risse oder Löcher in der Wandung des Hohlraums, beispielsweise einer Wandung eines Kanalrohrs, Anschlüsse, Verbindungsstellen von Bauteilen etc. sein. Das Strukturerkennungsmodul ist so ausgebildet und mit der Sensoreinrichtung bzw. der Kamera kommunikationsverbunden, dass es Daten bzw. Informationen von der Sensoreinrichtung empfängt und diese auswertet, in einer Weise, dass es in der erfassten Gestalt, z. B. in einem aufgenommenen Bild, automatisiert bestimmte Strukturen erkennt. Die Steuereinrichtung ist so ausgebildet, dass sie auf Grundlage der automatisiert erkannten Strukturen wiederum automatisiert bestimmte Vorgänge oder Aktionen ausführen kann. Dazu ist die Steuereinrichtung so ausgebildet, dass sie bei Erkennen einer bestimmten Struktur, beispielsweise einer Schadstelle, zumindest eine Aktion des Hohlrauminspektionssystems veranlasst. Das Strukturerkennungsmodul gibt dazu Informationen bzw. Steuerbefehle aus, welche die Steuereinrichtung dazu veranlassen, die genannte zumindest eine Aktion durchzuführen. Eine solche Ausgestaltung des Hohlrauminspektionssystems ermöglicht zumindest teilweise automatisierte Inspektions- oder Bearbeitungsvorgänge in dem Hohlraum, indem bestimmte Strukturen in erfassten Daten, wie z. B. in einem Bild von dem Strukturerkennungsmodul automatisiert erkannt werden und die Steuereinrichtung beim Erkennen einer bestimmten Struktur automatisiert eine bestimmte Aktion durchführt. Dadurch wird der Untersuchungs- oder Bearbeitungsvorgang im Hohlraum vereinfacht, da nicht alle Aktionen manuell gestartet und veranlasst werden müssen. Darüber hinaus kann mit Hilfe einer automatisierten Strukturerkennung eine zuverlässigere Begutachtung und ggf. Bearbeitung des Hohlraums veranlasst werden, da auf diese Weise eine konstant hohe Beobachtungsgenauigkeit realisiert werden kann.

Bei der beschriebenen Sensoreinrichtung handelt es sich um zumindest eine Kamera, es können jedoch zusätzlich andere Sensoreinrichtungen zum Einsatz kommen, welche geeignet sind, eine Gestalt oder Struktur einer Wandung eines Hohlraumes zumindest teilweise zu erfassen. Dabei können Kombinationen verschiedener Sensoren, deren erfasste Daten von der Auswerteeinrichtung vorzugsweise gemeinsam ausgewertet werden, verwendet werden. Die zumindest eine Sensoreinrichtung könnte zusätzlich auch eine ToF-Kamera (Time-of-Flight-Kamera), eine Lichtfeldkamera, ein Sonar, ein Radar, eine Distanzsensorik, eine Laser-Distanz-Sensorik, einen Lasersensor und/oder ähnliche Sensoren aufweisen.

Das Strukturerkennungsmodul kann derart ausgebildet sein, dass es bestimmte Strukturen z. B. anhand von Helligkeitsunterschieden, anhand des Kontrastes und/oder anhand von Farbunterschieden in den erfassten Daten und insbesondere dem aufgenommenen Bild erkennt. Weiter bevorzugt kann das Strukturerkennungsmodul zum Erkennen von Linien und/oder Kanten in dem aufgenommenen Bild ausgebildet sein, wobei derartige Linien und/oder Kanten in der genannten Weise beispielsweise anhand von Helligkeitsunterschieden, anhand des Kontrastes und/oder anhand von Farbunterschieden in einem aufgenommenen Bild erkannt werden können. Das Erkennen von bestimmten Strukturen, wie beispielsweise Löchern oder Schadstellen, kann durch Vergleich der erfassten Daten, wie z. B. der erfassten Bilddaten, mit vorbekannten Strukturen erfolgen. Das Strukturerkennungsmodul kann einen Datenspeicher oder eine Datenbank mit Strukturdaten aufweisen oder mit einem Datenspeicher mit Strukturdaten verbunden sein und zur Strukturerkennung durch Vergleich erfasster Informationen oder Bildinformationen mit den Strukturdaten aus dem Datenspeicher ausgebildet sein.

Das Strukturerkennungsmodul kann eine Mustererkennung bzw. ein Mustererkennungssystem zum Erkennen von Strukturen in den erfassten Daten oder Bilddaten aufweisen. Es kann sich dabei um Systeme zur syntaktischen, statischen und/oder strukturellen Mustererkennung handeln. Auf diese Weise können bestimmte gewünschte Strukturen wie beispielsweise Risse, Abzweige, Muffen und sonstige zu erkennende Strukturen in Hohlräumen bzw. besonders bevorzugt Kanalrohren von dem Strukturerkennungsmodul automatisiert erkannt werden. Dazu können zuvor hinterlegte Strukturdaten verwendet oder berücksichtigt werden, wobei das Strukturerkennungsmodul weiter bevorzugt ebenfalls so ausgebildet sein kann, dass es einen Datenspeicher mit hinterlegten Strukturdaten automatisch aktualisiert.

Das von der Kamera aufgenommene Bild, in welchem die Strukturen durch das Strukturerkennungsmodul erkannt werden, kann ein Einzelbild sein. Alternativ oder zusätzlich ist es jedoch möglich, die Erkennung auf Grundlage einer Mehrzahl von Einzelbildern und/oder eines Videos durchzuführen. Die Strukturerkennung erfolgt dabei im Wesentlich in Echtzeit, d. h. direkt beim Einführen der Inspektionseinheit in den Hohlraum bzw. beim Durchfahren des Hohlraums mit der Inspektionseinheit. Beim Durchfahren bewegt sich die Inspektionseinheit entweder mit Hilfe eines eigenen Antriebs oder mit Hilfe eines geeigneten Vorschubelementes durch den Hohlraum, beispielsweise durch ein Kanalrohr hindurch. Die Auswertung in Echtzeit ermöglicht eine sehr schnelle Untersuchung des Hohlraums. Ferner ermöglicht sie direkte Maßnahmen zur weiteren Untersuchung und ggf. Bearbeitung.

Die von der Steuereinrichtung beim Erkennen bestimmter Strukturen veranlasste zumindest eine Aktion kann beispielsweise eine Bewegung zumindest eines Elementes der Inspektionseinheit oder eine Bewegung einer Kamera, eine Bewegung zumindest eines Antriebes der Inspektionseinheit, eine Messwerterfassung, eine Speicherung von Daten, eine Anpassung einer Beleuchtung, Reinigung einer Sensoreinrichtung, wie zum Beispiel einer Kamera und/oder eine Anpassung einer Fluidzufuhr umfassen. Beliebige solcher Maßnahmen können einzeln oder in Kombination, d. h. auch gleichzeitig oder in vorbestimmter Folge als eine Aktion erfolgen.

Besonders bevorzugt kann die von der Steuereinrichtung veranlasste zumindest eine Aktion eine Bewegung, vorzugsweise ein Verschwenken und/oder eine Brennweitenänderung einer Kamera umfassen. So kann beispielsweise, wenn in einem Hohlraum eine näher zu untersuchende Struktur von dem Strukturerkennungsmodul erkannt wird, von der Steuereinrichtung automatisiert die Kamera so verschwenkt werden, dass die erkannte Struktur näher untersucht werden kann. Zum Verschwenken weist die Kamera bevorzugt einen geeigneten Verschwenkantrieb auf, welcher von der Steuereinrichtung ansteuerbar ist. Alternativ oder zusätzlich kann die Kamera mit einem System zur Brennweitenänderung, d. h. einem von der Steuereinrichtung ansteuerbarem Zoom versehen sein, welches es ermöglicht, die zu untersuchenden Strukturen vergrößert zu betrachten.

Eine weitere Aktion könnte sein, dass von der Steuereinrichtung ein Antrieb der Inspektionseinheit so angesteuert wird, dass die Inspektionseinheit beispielsweise näher an eine zu untersuchende Struktur heranbewegt wird. Alternativ oder zusätzlich könnte auch eine Abbiegeeinrichtung einer Inspektionseinheit von der Steuereinrichtung so angesteuert und bewegt werden, dass die Inspektionseinheit beispielsweise in einen Abzweig gelenkt wird, welcher zuvor von dem Strukturerkennungsmodul als bestimmte Struktur erkannt worden ist. Auch wäre es möglich, die Beleuchtung in Helligkeit und/oder Ausrichtung durch entsprechende, von der Steuereinrichtung ansteuerbare Beleuchtungseinrichtungen zu ändern, beispielsweise ebenfalls, um eine bestimmte Struktur besser und näher untersuchen zu können. Als Fluidzufuhr könnte beispielsweise ein Spüldruck geändert oder eine Spülmittelzufuhr ein- und/oder ausgeschaltet werden. Als Messwerterfassung könnte beispielsweise eine Höhenmessung oder Durchmessermessung oder ähnliches im Hohlraum veranlasst werden. Dazu kann ein mit der Steuereinrichtung gekoppeltes Messsystem zum Aufnehmen eines oder mehrerer Messwerte von der Steuereinrichtung in entsprechender Weise aktiviert werden. Ebenfalls könnte die Steuereinrichtung als Aktion eine Datenerfassung, Protokollierung, Speicherung und/oder Weiterleitung von Daten, beispielsweise zu Dokumentationszwecken als Aktion veranlassen. Beispielsweise könnte beim Erkennen einer bestimmten Struktur wie einer Schadstelle in der Wandung eines Hohlraumes von dieser ein Bild aufgenommen und abgespeichert werden.

Gemäß der Erfindung ist die Steuereinrichtung derart ausgebildet, dass sie die Position einer von dem Strukturerkennungsmodul erkannten Struktur bestimmt und eine Positionierung der Inspektionseinheit und/oder der Kamera relativ zu der erkannten Struktur veranlasst. D. h., wie oben beschrieben, kann die Steuereinrichtung beispielsweise einen Schwenkantrieb und/oder eine Zoomeinrichtung der Kamera in Abhängigkeit der erkannten Position ansteuern, um die erkannte Struktur näher betrachten zu können. Dabei ist die Position bevorzugt eine Position relativ zur aktuellen Position der Inspektionseinheit. Alternativ oder zusätzlich kann die Inspektionseinheit in der oben beschriebenen Weise durch Ansteuerung ihres Antriebes abhängig von der bestimmten Position bewegt werden. So kann beispielsweise die Inspektionseinheit um ein bestimmtes Maß in Abhängigkeit der erkannten Position verfahren werden, insbesondere vorbewegt werden, hin zu einer erkannten Struktur, um diese näher zu untersuchen oder beispielsweise die Inspektionseinheit in einen vorausliegend erkannten Abzweig lenken zu können oder eine Bearbeitung vornehmen zu können.

Das Strukturerkennungsmodul ist insbesondere so ausgebildet, dass es Strukturen in einem Bereich oder Bild aufnimmt, welcher vor der Inspektionseinheit gelegen ist bzw. welches den Bereich vor der Inspektionseinheit zeigt. D. h., die erkannten Strukturen liegen bevorzugt beabstandet vor der Inspektionseinheit, so dass besonders bevorzugt von der Steuereinrichtung der Abstand der Position der erkannten Struktur relativ zu der Inspektionseinheit in Vorschubrichtung der Inspektionseinheit bestimmt wird. Dies ermöglicht es dann, die Inspektionseinheit vorzugsweise um diesen Abstand oder um ein von diesem Abstand abhängiges Maß zu bewegen, um in eine definierte Lage zu der Position der erkannten Struktur zu gelangen. Die Positionsbestimmung kann besonders bevorzugt anhand von Bilddaten eines aufgenommenen Bildes durchgeführt werden. Die Steuereinrichtung kann daher derart ausgebildet sein, dass sie eine Auswertung der Bilddaten in der Weise vornimmt, dass sie die Position der erkannten Struktur bestimmt. Die Steuereinrichtung ist so ausgebildet, dass sie die Position einer erkannten Struktur unter Berücksichtigung zumindest eines zuvor oder aktuell erfassten Messwertes und/oder in einer Datenbank hinterlegter Daten bestimmt. So kann zur Positionsbestimmung beispielsweise ein vorbekannter oder gemessener Durchmesser des Hohlraums, beispielsweise eines Kanalrohres, berücksichtigt werden. Alternativ kann z. B. eine aktuelle Entfernungsmessung zu der erkannten Struktur über ein geeignetes Entfernungsmesssystem durchgeführt werden. Hierzu kann beispielsweise ein Lasermesssystem und/oder ein Triangulations-Messsystem verwendet werden. Alternativ oder zusätzlich ist es möglich, bestimmte Ausgestaltungen des Hohlraumes anhand zuvor in einem Datenspeicher oder einer Datenbank hinterlegter Daten zu bestimmen. Beispielsweise sind bei Kanalrohren bestimmte genormte Abmessungen oder Bauteile bekannt. Wenn in den Bilddaten, insbesondere unter Verwendung des Strukturerkennungsmoduls, beispielsweise eine ungefähre Form bzw. Struktur erkannt werden kann, können dann unter Zuordnung der bekannten möglichen Ausgestaltungen aufgrund genormter Bauteile die genauen Abmessungen aus einem Datenspeicher entnommen werden.

Gemäß einer weiteren möglichen Ausführungsform der Erfindung kann die Inspektionseinheit zumindest ein Bearbeitungswerkzeug, beispielsweise einen Fräser, aufweisen und die Steuereinrichtung kann zur Steuerung dieses Bearbeitungswerkzeuges bevorzugt abhängig von einer von dem Strukturerkennungsmodul erkannten Struktur ausgebildet sein. Ein solches Bearbeitungswerkzeug kann beispielsweise dazu dienen, in einem Kanalrohr einen eingezogenen Inliner an den Positionen von Abzweigen aufzufräsen. Das Strukturerkennungsmodul kann beispielsweise bestimmte Strukturen in Form von Einbuchtungen oder Ausbeulungen, welche in dem Inliner an den Stellen der Abzweige bzw. Einmündungen auftreten, erkennen. Die Steuereinrichtung kann dann, beispielsweise unter Zuhilfenahme der oben beschriebenen Positionsbestimmung, das Bearbeitungswerkzeug in eine Lage bewegen, dass die als Einmündung bzw. Abzweig erkannte Struktur von dem Bearbeitungswerkzeug bearbeitet werden kann, beispielsweise eine Einmündung aufgefräst werden kann. Alternativ oder zusätzlich ist es möglich, den Bearbeitungsprozess selber automatisiert zu steuern, indem die Steuereinrichtung erkennt, ob das Bearbeitungswerkzeug die Struktur in einer gewünschten Weise bearbeitet. Dabei kann beispielsweise eine von dem Strukturerkennungsmodul erkannte Struktur mit einer Sollstruktur verglichen werden und das Bearbeitungswerkzeug so gesteuert werden, dass eine Bearbeitung vorgenommen wird, solange, bis die erkannte Struktur der Sollstruktur entspricht. So kann beispielsweise eine Abzweigmuffe in automatisierter Weise bearbeitet werden.

Besonders bevorzugt ist das Strukturerkennungsmodul lernend oder selbstlernend ausgebildet, so dass es bevorzugt die Erkennungsgenauigkeit stetig verbessert und sich ggf. auch veränderten Umgebungsbedingungen anpassen kann. Unter dem Begriff "selbstlernend" ist dabei insbesondere jede Art des Anlernens oder Trainierens zu verstehen. Ein Anlernvorgang kann dadurch erleichtert werden, dass das Strukturerkennungsmodul mit Grunddaten zur Strukturerkennung versehen ist, welche zuvor in Versuchen ermittelt wurden und Bestandteil des Strukturerkennungsmoduls in dessen Auslieferungszustand sind. Bevorzugt wird das Strukturerkennungsmodul vortrainiert. Auf Grundlage der Grunddaten und/oder des vorfrainierten Zustandes kann das Strukturerkennungsmodul dann z. B. in Betrieb genommen werden. Anschließend kann es weiter bevorzugt in selbstlernender Weise die Strukturerkennung verbessern, indem beispielsweise Strukturdaten und/oder die genannten Grunddaten in einem Datenspeicher stetig durch das Strukturerkennungsmodul selber aktualisiert werden. Dabei kann es sich um einen lokalen Datenspeicher in dem Strukturerkennungsmodul oder auch um einen ausgelagerten Datenspeicher handeln. Alternativ oder zusätzlich kann das Strukturerkennungsmodul auch im Rahmen regelmäßiger oder unregelmäßiger Updates in seinen Eigenschaften und Fähigkeiten verbessert bzw. aktualisiert werden.

Gemäß einer weiteren bevorzugten Ausführungsform der Erfindung ist nicht nur das Strukturerkennungsmodul, sondern das gesamte Hohlrauminspektions- bzw. -bearbeitungssystem lernend oder selbstlernend ausgebildet. So kann ein gesamter Prozess trainiert bzw. angelernt werden, wie z. B. das automatische Erkennen und Auffräsen eines Anschlusses in einem Kanalrohr. Dazu weist vorzugsweise die Steuereinrichtung, welche zur Steuerung des Gesamtsystems ausgebildet ist, eine künstliche Intelligenz wie z. B. ein neuronales Netz auf, welche bevorzugt wie vorangehend und nachfolgend beschrieben ausgebildet sein können.

Das Strukturerkennungsmodul weist eine künstliche Intelligenz und zumindest ein neuronales Netz auf, unter dessen Verwendung Strukturen
in den Bilddaten erkannt werden. Ein solches neuronales Netz bzw. eine solche künstliche Intelligenz können angelernt bzw. trainiert werden, um gewünschte Strukturen wiederkehrend zu erkennen. Das Anlernen kann beispielsweise mit vorhandenen Daten wie z. B. Bilddaten erfolgen, in welchen die zu erkennenden Strukturen gekennzeichnet sind oder ggf. von einer Bedienperson in einem Anlernprozess oder im späteren Betrieb manuell gekennzeichnet werden.

Das Strukturerkennungsmodul kann lokal in dem Hohlrauminspektionssystem und beispielsweise in der Inspektionseinheit oder einer mit der Inspektionseinheit verbundenen Steuereinrichtung ausgebildet sein. Alternativ kann das Strukturerkennungsmodul in einem zentralen Rechensystem ausgebildet sein, welches mit der Steuereinrichtung und vorzugsweise mit den Steuereinrichtungen mehrerer Inspektionseinheiten kommunikationsverbunden ist. Dabei kann dies eine Kommunikationsverbindung sein, welche eine Strukturerkennung in Echtzeit ermöglicht. Alternativ kann es auch möglich sein, dass von der Inspektionseinrichtung aufgenommene Daten wie z. B. Bilddaten gespeichert und zu einem oder mehreren gewählten Zeitpunkten an das Strukturerkennungsmodul übermittelt werden. Dies kann eine Übertragung zu regelmäßigen Zeitpunkten sein, wobei die Zeitintervalle sehr kurz im Sekundenbereich oder auch länger sein können. Die Verbindung mehrerer Inspektionseinheiten mit einem zentralen Rechensystem hat den Vorteil, dass auf diese Weise ein Trainieren bzw. Selbstlernen des Strukturerkennungsmoduls auf Grundlage der Daten bzw. Bilddaten mehrerer Inspektionseinheiten erfolgen kann, so dass die Erkennungsgenauigkeit sehr schnell verbessert werden kann.

Ferner ist es möglich, dass das Strukturerkennungsmodul mit einem zentralen Rechensystem derart kommunikationsverbunden ist, dass das Strukturerkennungsmodul Daten über erkannte Strukturen an das zentrale Rechensystem überträgt und/oder Daten für die Strukturerkennung von dem zentralen Rechensystem empfängt. Dies kann online kontinuierlich oder zu vorbestimmten Zeitpunkten oder beispielsweise auch in Form manueller Daten- bzw. Softwareupdates erfolgen. Durch einen Datenaustausch zwischen dem Strukturerkennungsmodul und dem zentralen Rechensystem wird es möglich, eine Vielzahl von Strukturerkennungsmodulen auf Grundlage aller von diesen Strukturerkennungsmodulen erfassten Daten zu aktualisieren und so die Erkennungsgenauigkeit zu verbessern. So können die Strukturerkennungsmodule untereinander und voneinander lernen.

Um eine Datenübertragung zu ermöglichen, kann das Strukturerkennungsmodul mit dem zentralen Rechensystem über ein Kommunikations-Netzwerk und bevorzugt über das Internet kommunikationsverbunden sein. Das Kommunikations-Netzwerk kann ein lokales oder regionales Netzwerk sein, welches in einem bestimmten kleineren räumlichen Umfang Inspektionseinheiten mit einem zentralen Rechensystem, beispielsweise in einem Leit- bzw. Steuerstand verbindet. Alternativ ist eine Verbindung über ein Kommunikations-Netzwerk wie das Internet, möglich, welches eine Vernetzung an nahezu beliebigen Standorten ermöglicht. Eine solche Vernetzung kann eine Mobilfunkanbindung, W-LAN-Anbindung oder ähnliches umfassen. Auch ein manueller Datenaustausch mit Hilfe eines Datenträgers wie einer Festplatte oder eines USB-Sticks wäre möglich, wobei dazu die Steuereinrichtung vorzugsweise mit einer geeigneten Schnittstelle bzw. einem geeigneten Anschluss versehen ist. Auf diese Weise ist es möglich, auch voneinander entfernte Geräte so miteinander zu verknüpfen, dass verschiedene Strukturerkennungsmodule voneinander lernen und laufend aktualisiert bzw. verbesserte werden können.

Das Strukturerkennungsmodul ist besonders bevorzugt als Softwaremodul ausgebildet, welches auf einem Computersystem in der Kamera und/oder einem Computersystem in der Inspektionseinheit und/oder einem Computersystem in einem mit der Inspektionseinheit verbundenen Computersystem ausgeführt wird. Wenn das Strukturerkennungsmodul in einem Rechner bzw. in einem Computersystem in der Kamera oder der Inspektionseinheit implementiert ist, ermöglicht dies, ein Hohlrauminspektionssystem in Form einer autonomen Inspektionseinheit zu schaffen, welche nach Art eines Roboters selbsttätig einen Hohlraum durchfahren und untersuchen kann. So kann das Hohlrauminspektionssystem besonders bevorzugt als ein autonom arbeitender Hohlraum- bzw. Kanalrohrroboter ausgebildet sein. Abhängig von der zur Verfügung stehenden Rechenleistung kann das Strukturerkennungsmodul an beliebiger Position in das Hohlrauminspektionssystem integriert sein. Zweckmäßigerweise könnte das Strukturerkennungsmodul in ein Computersystem in einem Steuerstand für eine Inspektionseinheit, welcher außerhalb des Hohlraumes verbleibt, integriert sein. In einem solchen Steuerstand steht in der Regel mehr Bauraum für erforderliche Rechenanlagen zur Verfügung.

Nachfolgend wird die Erfindung beispielhaft anhand der beigefügten Figuren beschrieben. In diesen zeigt:
- Fig. 1: schematisch eine Schnittansicht eines Kanalrohrs mit einem erfindungsgemäßen Hohlrauminspektionssystem in einer ersten Position,
- Fig. 2: eine Draufsicht auf die Kamera der Inspektionseinheit nach Fig. 1,
- Fig. 3: eine Ansicht gemäß Fig. 1 mit der Inspektionseinheit in einer zweiten Position und
- Fig. 4: schematisch ein von der Kamera der Inspektionseinheit gemäß Fig. 1 aufgenommenes Bild.

Nachfolgend wird die Erfindung beispielhaft anhand eines Hohlrauminspektionssystems für ein Kanalrohr beschrieben. Es ist zu verstehen, dass die nachfolgend in Kombination beschriebenen Merkmale auch einzeln und in anderer Kombination ausgeführt werden könnten.

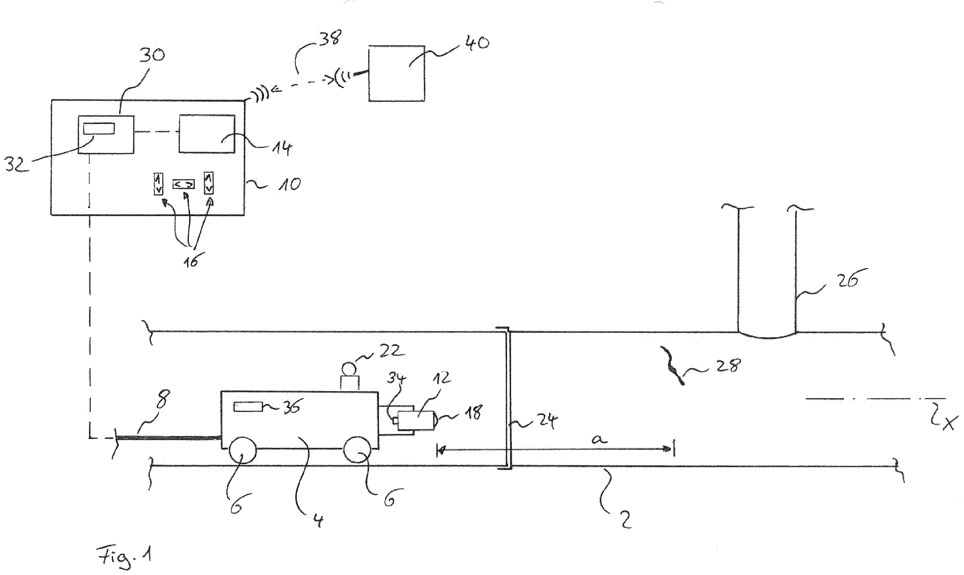

Fig. 1 zeigt ein Kanalrohr 2 mit einer darin angeordneten Inspektionseinheit 4 in Form eines Fahrwagens. Die Inspektionseinheit 4 ist im Inneren des Kanalrohrs 2 auf Rädern 6 verfahrbar, von welchen eines oder mehrere angetrieben sein können. Auf diese Weise ist die Inspektionseinheit 4 in der Längsrichtung X in dem Kanalrohr 2 vor und zurück bewegbar. An ihrem rückseitigen Ende ist die Inspektionseinheit 4 über ein Versorgungskabel 8 mit einer Steuereinrichtung 10 verbunden, welche in diesem Ausführungsbeispiel außerhalb des Kanalrohrs 2 angeordnet ist. Das Versorgungskabel 8 dient zum einen der Datenkommunikation, zum anderen der Energiezufuhr zu der Inspektionseinheit 4 und kann darüber hinaus auch noch der Spülmittelzufuhr dienen.

An ihrem vorderen Ende weist die Inspektionseinheit 4 eine schwenkbare Kamera 12 auf, welche eine Sensoreinrichtung bildet. Alternativ oder zusätzlich können mehrere Kameras mit verschiedenen Blickrichtungen an der Inspektionseinheit 4 oder andere geeignete Sensoreinrichtungen angeordnet sein. Nachfolgend wird die Erfindung weiter am Beispiel einer Kamera als Sensoreinrichtung beschrieben. Es ist jedoch zu verstehen, dass die Erfindung entsprechend auch mit anderen, insbesondere auch Kombinationen verschiedener Sensoreinrichtungen, realisiert werden kann.

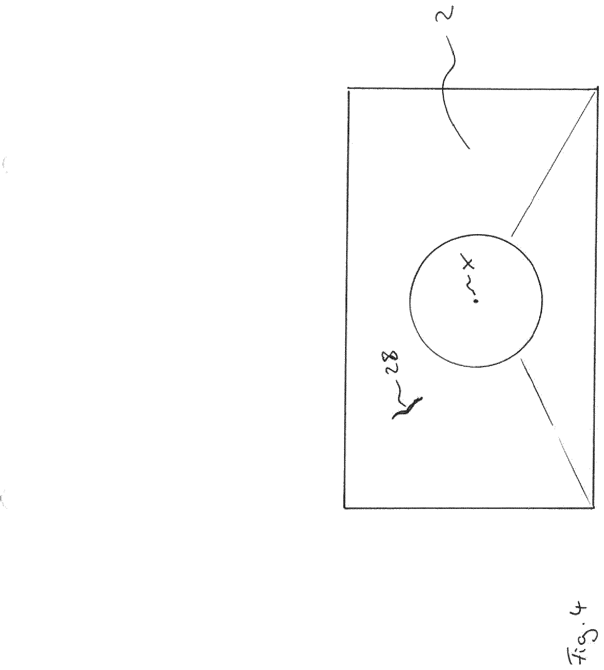

Ein von der Kamera 12 aufgenommenes Bild, insbesondere Videobild, wird über das Versorgungskabel 8 zu der Steuereinrichtung 10 übertragen und kann dort auf einem Monitor 14 zur Anzeige gebracht werden. Die Steuereinheit 10 weist darüber hinaus Bedienelemente 16 auf, welche zur Bedienung bzw. Einstellung durch eine Bedienperson dienen. Mit Hilfe der Bedienelemente 16 kann die Steuerung der Inspektionseinheit 4 und ggf. die Bildauswertung manuell eingestellt werden. In der in Fig. 1 gezeigten Position der Kamera 12 ist die Blickrichtung des Objektivs 18 nach vorne in Richtung der Längsachse x gerichtet, so dass die Kamera 12 im Wesentlichen ein Bild erfasst, wie es schematisch in Fig. 4 dargestellt ist.

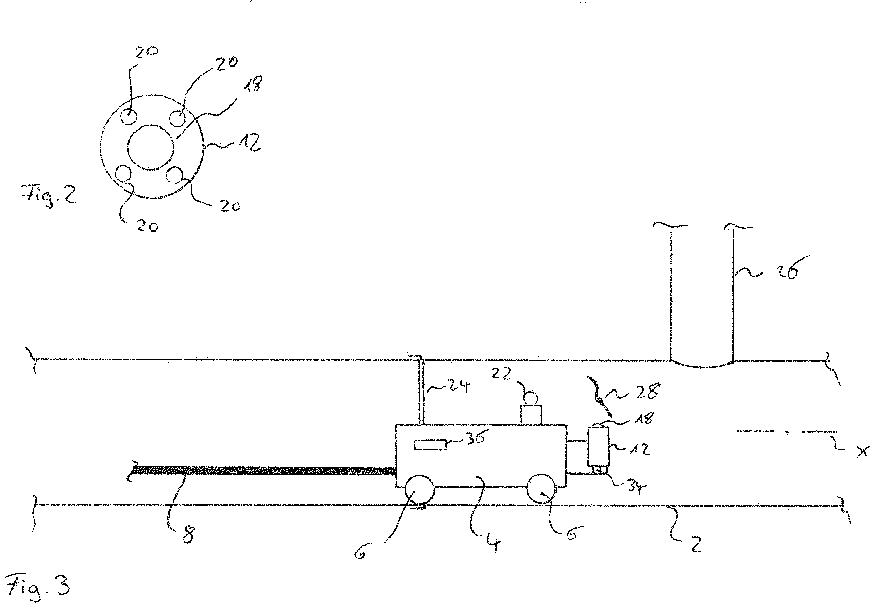

Wie in Fig. 2, welche eine schematische Draufsicht auf die Frontseite der Kamera 12 zeigt, dargestellt ist, ist das Objektiv 18 von mehreren Beleuchtungseinrichtungen 20 umgeben, welche vorzugsweise ebenfalls von der Steuereinrichtung 10 ansteuerbar sind.

In Fig. 1 ist an dem Fahrwagen bzw. der Inspektionseinheit 4 schematisch noch ein Bearbeitungswerkzeug in Form eines Fräsers 22 gezeigt, welcher in radialer Richtung bezogen auf die Längsachse x ausfahrbar sein kann. In dem von der Kamera 12 aufgenommenen Bild bzw. Videobild können Strukturen an und in der Wandung des Kanalrohrs 2 erkannt werden. In Fig. 1 sind als Beispiel für solche Strukturen schematisch der Spalt 24 der Verbindungsstelle bzw. Muffe zwischen zwei Rohrabschnitten, ein Abzweig 26 sowie eine Schadstelle 28 in Form eines Risses gezeigt.

Erfindungsgemäß weist die Steuereinrichtung 10 eine Bildauswerteeinrichtung 30 auf, welche das von der Kamera 18 erfasste Bild, wie es beispielhaft in Fig. 4 gezeigt ist, automatisiert auswertet. Die Bildauswerteeinrichtung 30 weist ein Strukturerkennungsmodul 32 auf, welches dazu ausgebildet ist, automatisiert bestimmte Strukturen in dem Bild zu erkennen. Dazu nutzt das Strukturerkennungsmodul 32 erfindungsgemäß bevorzugt eine künstliche Intelligenz, beispielsweise ein neuronales Netzwerk. Ein solches System kann insbesondere selbstlernend bzw. anlernbar ausgebildet sein, so dass es selbsttätig bestimmte Strukturen erkennen kann. So kann in dem aufgenommenen Bild, wie es in Fig. 4 gezeigt ist, beispielsweise die Schadstelle 28 in Form eines Risses von dem Strukturerkennungsmodul 32 identifiziert werden. Alternativ wäre es auch möglich, z. B. den Spalt 24 oder die Einmündung des Abzweiges 26 in dem Bild automatisiert zu erkennen. Nachfolgend wird jedoch nur das Beispiel des Risses 28 weiter beschrieben. Basierend auf der erkannten Struktur (hier die Schadstelle 28) kann die Steuereinrichtung 10 automatisiert zumindest eine Aktion ausführen. Eine solche startet sie z. B. auf Grundlage eines von dem Strukturerkennungsmodul 32 ausgesendeten Erkennungssignals, welches das Erkennen einer bestimmten Struktur signalisiert.

So kann die Steuereinrichtung 10 durch zusätzliche Messsysteme oder direkt aus dem aufgenommenen Bild beispielsweise den Abstand a der erkannten Schadstelle 28 von der Inspektionseinheit 4 erkennen und anschließend die Inspektionseinheit 4 um den Abstand a in dem Kanalrohr 2 vorschieben, wie in Fig. 3 gezeigt ist. In Fig. 3 befindet sich die Inspektionseinheit 4 in der vorgefahrenen Position. In Fig. 3 ist die Steuereinrichtung 10 nicht nochmals gezeigt. Es ist zu verstehen, dass diese genauso ausgebildet ist, wie in Fig. 1 gezeigt. Als weitere Aktion steuert die Steuereinrichtung 10 einen Schwenkantrieb der Kamera 12 so an, dass das Objektiv 18 in radialer Richtung zu der Längsachse x frontal auf die erkannte Schadstelle 28 gerichtet ist, so dass diese nun detailliert auf dem Monitor 14 betrachtet werden kann. Dieser Anfahr- und Positionierungsprozess kann von der Steuereinrichtung 10 vollautomatisch veranlasst werden, so dass eine Bedienperson dann lediglich noch die Schadstelle 28 genau betrachten muss. Es ist zu verstehen, dass die Kamera 12 zusätzlich auch mit einem Zoom ausgestattet sein könnte, um eine Schadstelle noch näher betrachten zu können. Alternativ oder zusätzlich könnte die Steuereinrichtung 10 auch die Beleuchtungseinrichtungen 20 ansteuern, um die Beleuchtung zur näheren Betrachtung zu ändern.

Alternativ oder zusätzlich wäre es ferner möglich, dass die Steuereinrichtung 10 automatisiert das Bearbeitungswerkzeug 22 steuert, um vorzugsweise unter Beobachtung der Kamera 12, automatisiert einen Bearbeitungsvorgang, beispielsweise ein Auffräsen der Einmündung des Abzweiges 26, zu veranlassen. Alternativ oder zusätzlich könnte die Kamera 12 mit einem Vorschubantrieb 34 ausgestattet sein, welcher es ermöglicht, nach entsprechender Positionierung der Inspektionseinheit 4 die Kamera 12 in den Abzweig 26 vorzuschieben. Auch dies kann automatisiert erfolgen, wenn das Strukturerkennungsmodul 32 den Abzweig 26 erkannt hat. D. h., die Inspektionseinheit 4 wird von der Steuereinrichtung 10 entsprechend positioniert und die Kamera 12 automatisch in den Abzweig 26 eingefahren.

Die Steuereinrichtung 10 kann bei Erkennen einer entsprechenden Struktur 24, 26, 28 durch das Strukturerkennungsmodul 32 beliebige Aktionen veranlassen, welche grundsätzlich alle Funktionalitäten einer Inspektionseinrichtung beinhalten können, beispielsweise auch ein Spülen, eine Anpassung einer Spülmittelzufuhr, eine Messung, Datenspeicherung etc.. Die Messung könnte beispielsweise eine Höhenmessung mit Hilfe eines Positions- und/oder Lagesensors 36 in der Inspektionseinheit 4 sein. So könnte beispielsweise nach Erfassen einer Schadstelle 38 deren Position bzw. Lage erfasst und dokumentiert werden.

Das Strukturerkennungsmodul 32 kann mit der Steuereinrichtung 10 als autarkes System ausgebildet sein. Es ist jedoch auch möglich, dass die Steuereinrichtung 10 über eine Kommunikationsverbindung 38 mit einem zentralen Rechensystem 40 kommuniziert, wie schematisch in Fig. 1 dargestellt ist. So könnte das Strukturerkennungsmodul 32 ganz oder teilweise in ein zentrales Rechensystem 40 ausgelagert sein, wobei dann von der Steuereinrichtung 10 aufgenommene Bilddaten über die Kommunikationsschnittstelle 38 an das zentrale Rechensystem 40 übertragen würden. Alternativ oder zusätzlich ist es möglich, das Strukturerkennungsmodul 32 über das zentrale Rechensystem 40 anzulernen bzw. mit Grunddaten zur Strukturerkennung zu versorgen. Das Strukturerkennungsmodul 32 kann dazu seine erfassten bzw. erkannten Strukturdaten an das zentrale Rechensystem 40 übertragen, so dass in diesem grundlegende Daten aktualisiert werden können, welche dann wiederum dem Strukturerkennungsmodul 32 und bevorzugt weiteren Strukturerkennungsmodulen 32 über entsprechende Kommunikationsverbindungen 38 zur Verfügung gestellt werden können. So kann das zentrale Rechensystem 40 über das Internet angebunden sein, so dass auf diese Weise viele Hohlrauminspektionssysteme mit vielen Strukturerkennungsmodulen 32 voneinander lernen und gemeinsam aktualisiert werden können.

Ferner wäre es möglich, die gesamte Steuereinrichtung 10 in die Kamera 12 oder die Inspektionseinheit 4 zu integrieren, so dass diese als autonom fahrende Kamera oder autonom fahrender und arbeitendender Roboter bzw. Kanalroboter ausgebildet sein könnte.

Es ist zu verstehen, dass vielfältige Kombinationsmöglichkeiten eines Strukturerkennungsmoduls 32 mit verschiedensten Aktoren und/oder Sensoren in einer Inspektionseinheit möglich sind, welche ebenfalls als Bestandteil der Erfindung anzusehen sind.

### Bezugszeichenliste

- 2: - Kanalrohr
- 4: - Inspektionseinheit
- 6: - Räder
- 8: - Versorgungskabel
- 10: - Steuereinrichtung
- 12: - Kamera
- 14: - Monitor
- 16: - Bedienelemente
- 18: - Objektiv
- 20: - Beleuchtungseinrichtungen
- 22: - Bearbeitungswerkzeug
- 24: - Spalt
- 26: - Abzweig
- 28: - Schadstelle
- 30: - Bildauswerteeinrichtung
- 32: - Strukturerkennungsmodul
- 34: - Vorschubantrieb
- 36: - Lagesensor
- 38: - Kommunikationsverbindung
- 40: - zentrales Rechensystem
- a: - Abstand
- x: - Längsachse

## Patentansprüche

1. Hohlrauminspektionssystem mit
einer zum Einführen in einen Hohlraum (2) ausgebildeten Inspektionseinheit (4), welche zumindest eine Sensoreinrichtung (12) mit einer Kamera aufweist, mit welcher das Innere des Hohlraums betrachtet werden kann und welche zum Erfassen einer Gestalt einer Wandung des Hohlraumes ausgebildet ist,
sowie einer Steuereinrichtung (10) zum Steuern der Inspektionseinheit (4), welche eine mit der Sensoreinrichtung (12) verbundene Auswerteeinrichtung (30) aufweist,
wobei die Auswerteeinrichtung (30) ein Strukturerkennungsmodul (32) aufweist, welches derart ausgebildet ist, dass es in der von der Sensoreinrichtung (12) erfassten Gestalt Strukturen (24, 26, 28) erkennt,
**dadurch gekennzeichnet, dass**
die Auswerteeinrichtung eine Bildauswerteeinrichtung ist, in welcher das Strukturerkennungsmodul (32) ein neuronales Netz aufweist und derart ausgebildet ist, dass es in einem von der Kamera (12) aufgenommenen Bild bestimmte Strukturen (24, 26, 28) erkennt, und
die Steuereinrichtung (10) derart ausgebildet ist,
dass sie bei Erkennen einer bestimmten Struktur (24, 26, 28) durch das Strukturerkennungsmodul (32) zumindest eine Aktion des Hohlrauminspektionssystems veranlasst,
dass sie die Position (a) einer von dem Strukturerkennungsmodul (32) erkannten Struktur (24, 26, 28) bestimmt und eine Positionierung der Inspektionseinheit (4) und/oder der Kamera (12) relativ zu der erkannten Struktur (24, 26, 28) veranlasst,
und dass sie die Position (a) einer erkannten Struktur (24, 26, 28) unter Berücksichtigung zumindest eines zuvor oder aktuell erfassten Messwertes und/oder in einer Datenbank hinterlegter Daten bestimmt.

2. Hohlrauminspektionssystem nach Anspruch 1, **dadurch gekennzeichnet, dass** die zumindest eine Sensoreinrichtung zumindest eine ToF-Kamera, eine Lichtfeldkamera, ein Sonar, ein Radar, eine Distanzsensorik und/oder einen Laser-Sensor aufweist.

3. Hohlrauminspektionssystem nach einem der vorangehenden Ansprüche, **dadurch gekennzeichnet, dass** das Strukturerkennungsmodul (32) derart ausgebildet ist, dass es Strukturen (24, 26, 28) anhand von Helligkeitsunterschieden, des Kontrastes und/oder von Farbunterschieden in dem aufgenommenen Bild erkennt.

4. Hohlrauminspektionssystem nach einem der vorangehenden Ansprüche, **dadurch gekennzeichnet, dass** das Strukturerkennungsmodul (32) zum Erkennen von Linien und/oder Kanten in dem aufgenommenen Bild ausgebildet ist.

5. Hohlrauminspektionssystem nach einem der vorangehenden Ansprüche, **dadurch gekennzeichnet, dass** das Strukturerkennungsmodul (32) einen Datenspeicher mit Strukturdaten aufweist oder mit einem Datenspeicher mit Strukturdaten verbunden ist und zur Strukturerkennung durch Vergleich erfasster Informationen oder Bildinformationen mit den Strukturdaten ausgebildet ist.

6. Hohlrauminspektionssystem nach einem der vorangehenden Ansprüche, **dadurch gekennzeichnet, dass** das von der Kamera (12) aufgenommene Bild, in welchem die Strukturen (24, 26, 28) durch das Strukturerkennungsmodul (32) erkannt werden, ein Einzelbild, eine Mehrzahl von Einzelbildern und/oder ein Video ist.

7. Hohlrauminspektionssystem nach einem der vorangehenden Ansprüche, **dadurch gekennzeichnet, dass** die von der Steuereinrichtung (10) veranlasste zumindest eine Aktion eine Bewegung zumindest eines Elementes der Inspektionseinheit (4) oder einer Kamera (12), eine Bewegung zumindest eines Antriebes (6) der Inspektionseinheit (4), eine Messwerterfassung, eine Speicherung von Daten, eine Anpassung einer Beleuchtung (20), eine Reinigung der Sensoreinrichtung und/oder eine Anpassung einer Fluidzufuhr umfasst.

8. Hohlrauminspektionssystem nach Anspruch 7, **dadurch gekennzeichnet, dass** die von der Steuereinrichtung (10) veranlasste zumindest eine Aktion eine Bewegung, vorzugsweise ein Verschwenken, und/oder eine Brennweitenänderung einer Kamera (12) umfasst.

9. Hohlrauminspektionssystem nach einem der vorangehenden Ansprüche, **dadurch gekennzeichnet, dass** die Steuereinrichtung (10) derart ausgebildet ist, dass sie die Position der erkannten Struktur (24, 26, 28) aus den Bilddaten eines von der Kamera (12) aufgenommen Bildes ermittelt.

10. Hohlrauminspektionssystem nach einem der vorangehenden Ansprüche, **dadurch gekennzeichnet, dass** die Inspektionseinheit (4) zumindest ein Bearbeitungswerkzeug (22) aufweist und die Steuereinrichtung (10) zur Steuerung dieses Bearbeitungswerkzeuges (22), bevorzugt abhängig von einer von dem Strukturerkennungsmodul (32) erkannten Struktur (24, 26, 28), ausgebildet ist.

11. Hohlrauminspektionssystem nach einem der vorangehenden Ansprüche, **dadurch gekennzeichnet, dass** das Strukturerkennungsmodul (32) selbstlernend ausgebildet ist.

12. Hohlrauminspektionssystem nach einem der vorangehenden Ansprüche, **dadurch gekennzeichnet, dass** das Strukturerkennungsmodul (32) in einem zentralen Rechensystem (40) ausgebildet ist, welches mit der Steuereinrichtung (10) und vorzugsweise mit den Steuereinrichtungen (10) mehrerer Inspektionseinheiten (4) kommunikationsverbunden ist.

13. Hohlrauminspektionssystem nach einem der vorangehenden Ansprüche, **dadurch gekennzeichnet, dass** das Strukturerkennungsmodul (32) mit einem zentralen Rechensystem (40) derart kommunikationsverbunden ist, dass das Strukturerkennungsmodul (32) Daten über erkannte Strukturen an das zentrale Rechensystem (40) überträgt und/oder Daten für die Strukturerkennung von dem zentralen Rechensystem (40) empfängt.

14. Hohlrauminspektionssystem nach Anspruch 12 oder 13, **dadurch gekennzeichnet, dass** das Strukturerkennungsmodul (32) mit dem zentralen Rechensystem (40) über ein Kommunikations-Netzwerk (38) und bevorzugt über das Internet kommunikationsverbunden ist.

15. Hohlrauminspektionssystem nach einem der vorangehenden Ansprüche, **dadurch gekennzeichnet, dass** das Strukturerkennungsmodul (32) ein Softwaremodul ist, welches auf einem Computersystem in der Sensoreinrichtung oder Kamera (12) und/oder in der Inspektionseinheit (4) und/oder in einem mit der Inspektionseinheit (10) verbundenen Computersystem ausgeführt wird.

## Claims

1. Cavity inspection system comprising
an inspection unit (4) designed for insertion into a cavity (2), which comprises at least one sensor device (12) with a camera, using which the interior space of the cavity can be viewed and which is designed to detect the shape of a wall of the cavity,
as well as a control device (10) for controlling the inspection unit (4), which comprises an evaluation device (30) connected to the sensor device (12),
wherein the evaluation device (30) comprises a structure recognition module (32) which is designed in such a way that it recognizes structures (24, 26, 28) in the shape detected by the sensor device (12),
**characterized in that**
the evaluation device is an image evaluation device in which the structure recognition module (32) comprises a neural network and is designed in such a way that it recognizes certain structures (24, 26, 28) in an image captured by the camera (12), and
the control device (10) is designed in such a way that,
when a certain structure (24, 26, 28) is detected by the structure recognition module (32), it initiates at least one action of the cavity inspection system,
that it determines the position (a) of a structure (24, 26, 28) recognized by the structure recognition module (32) and prompts a positioning of the inspection unit (4) and/or the camera (12) relative to the recognized structure (24, 26, 28),
and that it determines the position (a) of a recognized structure (24, 26, 28) taking into account at least one previously or currently detected measured value and/or data stored in a database.

2. The cavity inspection system according to Claim 1, **characterized in that** at least one sensor device comprises at least one ToF camera, one light-field camera, one sonar unit, one radar unit, one distance sensor and/or one laser sensor.

3. The cavity inspection system according to any one of the preceding claims, **characterized in that** the structure recognition module (32) is designed in such a way that it recognizes structures (24, 26, 28) on the basis of differences in brightness, contrast and/or colour differences in the captured image.

4. The cavity inspection system according to any one of the preceding claims, **characterized in that** the structure recognition module (32) is designed to recognize lines and/or edges in the captured image.

5. The cavity inspection system according to any one of the preceding claims, **characterized in that** the structure recognition module (32) comprises a data storage with structural data or is connected to a data storage with structural data and is designed for structure recognition by comparison of acquired information or image information with the structural data.

6. The cavity inspection system according to any one of the preceding claims, **characterized in that** the image captured by the camera (12), in which the structures (24, 26, 28) are recognized by the structure recognition module (32), is a single image, a plurality of frames and/or a video.

7. The cavity inspection system according to any one of the preceding claims, **characterized in that** the action initiated by the control device (10) comprises at least one action, a movement of at least one element of the inspection unit (4) or a camera (12), a movement of at least one drive (6) of the inspection unit (4), the acquisition of measured values, the storage of data, an adjustment of a lighting (20), a cleaning of the sensor device and/or an adjustment of a fluid supply.

8. The cavity inspection system according to Claim 7, **characterized in that** at least one action initiated by the control device (10) comprises a movement, preferably a swivelling, and/or a change in focal length of a camera (12).

9. Cavity inspection system according to any one of the preceding claims, **characterized in that** the control device (10) is designed in such a way that it determines the position of the recognized structure (24, 26, 28) from the image data of an image captured by the camera (12).

10. The cavity inspection system according to any one of the preceding claims, **characterized in that** the inspection unit (4) comprises at least one machining tool (22) and the control device (10) is designed to control this machining tool (22), preferably depending on a structure (24, 26, 28) recognized by the structure recognition module (32).

11. The cavity inspection system according to any one of the preceding claims, **characterized in that** the structure recognition module (32) is designed to be self-learning.

12. The cavity inspection system according to any one of the preceding claims, **characterized in that** the structure recognition module (32) is designed in a central computing system (40) which is connected to the control device (10) and preferably to the control devices (10) of a plurality of inspection units (4).

13. The cavity inspection system according to any one of the preceding claims, **characterized in that** the structure recognition module (32) is connected to a central computing system (40) in such a way that the structure recognition module (32) transmits data about recognized structures to the central computing system (40) and/or receives data for structure recognition from the central computing system (40).

14. The cavity inspection system according to Claim 12 or 13, **characterized in that** the structure recognition module (32) is connected to the central computing system (40) via a communication network (38) and preferably via the internet.

15. The cavity inspection system according to any one of the preceding claims, **characterized in that** the structure recognition module (32) is a software module running on a computer system in the sensor device or camera (12) and/or in the inspection unit (4) and/or in a computer system connected to the inspection unit (10).

## Revendications

1. Système d'inspection d'espace creux, comprenant
une unité d'inspection (4) destinée à être insérée dans un espace creux (2), laquelle présente au moins un dispositif capteur (12) doté d'une caméra, avec lequel l'intérieur de l'espace creux peut être visualisé et lequel est conçu pour détecter une configuration d'une paroi de l'espace creux,
ainsi qu'un dispositif de commande (10) destiné à commander l'unité d'inspection (4), lequel présente un dispositif d'évaluation (30) relié au dispositif capteur (12),
dans lequel le dispositif d'évaluation (30) présente un module de reconnaissance de structures (32), lequel est conçu de manière à reconnaître des structures (24, 26, 28) dans la configuration détectée par le dispositif capteur (12),
**caractérisé en ce que**
le dispositif d'évaluation est un dispositif d'évaluation d'image, dans lequel le module de reconnaissance de structures (32) présente un réseau neuronal et est conçu de manière à reconnaître des structures (24, 26, 28) particulières dans une image capturée par la caméra (12), et
le dispositif de commande (10) est conçu de manière à
initier au moins une action du système d'inspection d'espace creux lors de la reconnaissance d'une structure (24, 26, 28) particulière par le module de reconnaissance de structures (32),
déterminer la position (a) d'une structure (24, 26, 28) reconnue par le module de reconnaissance de structures (32) et initier un positionnement de l'unité d'inspection (4) et/ou de la caméra (12) par rapport à la structure (24, 26, 28) reconnue,
et déterminer la position (a) d'une structure (24, 26, 28) reconnue en tenant compte d'au moins une valeur de mesure détectée précédemment ou actuellement et/ou de données enregistrées dans une base de données.

2. Système d'inspection d'espace creux selon la revendication 1, **caractérisé en ce que** l'au moins un dispositif capteur présente au moins une caméra ToF, une caméra à champ lumineux, un sonar, un radar, un capteur de distance et/ou un capteur laser.

3. Système d'inspection d'espace creux selon l'une des revendications précédentes, **caractérisé en ce que** le module de reconnaissance de structures (32) est conçu de manière à reconnaître des structures (24, 26, 28) à l'aide de différences de luminosité, du contraste et/ou de différences de couleur dans l'image capturée.

4. Système d'inspection d'espace creux selon l'une des revendications précédentes, **caractérisé en ce que** le module de reconnaissance de structures (32) est conçu pour la reconnaissance de lignes et/ou d'arêtes dans l'image capturée.

5. Système d'inspection d'espace creux selon l'une des revendications précédentes, **caractérisé en ce que** le module de reconnaissance de structures (32) présente une mémoire de données avec des données de structure ou est relié à une mémoire de données avec des données de structure et conçu pour la reconnaissance de structures par comparaison d'informations détectées ou d'informations d'image avec les données de structure.

6. Système d'inspection d'espace creux selon l'une des revendications précédentes, **caractérisé en ce que** l'image capturée par la caméra (12), dans laquelle les structures (24, 26, 28) sont reconnues par le module de reconnaissance de structures (32), est une image individuelle, une pluralité d'images individuelles et/ou une vidéo.

7. Système d'inspection d'espace creux selon l'une des revendications précédentes, **caractérisé en ce que** l'au moins une action initiée par le dispositif de commande (10) comporte un déplacement d'au moins un élément de l'unité d'inspection (4) ou d'une caméra (12), un déplacement d'au moins un entraînement (6) de l'unité d'inspection (4), une détection de valeur de mesure, un enregistrement de données, une adaptation d'un éclairage (20), un nettoyage du dispositif capteur et/ou une adaptation d'une arrivée de fluide.

8. Système d'inspection d'espace creux selon la revendication 7, **caractérisé en ce que** l'au moins une action initiée par le dispositif de commande (10) comporte un déplacement, de préférence un pivotement, et/ou une modification de distance focale d'une caméra (12).

9. Système d'inspection d'espace creux selon l'une des revendications précédentes, **caractérisé en ce que** le dispositif de commande (10) est conçu de manière à déterminer la position de la structure (24, 26, 28) reconnue à partir des données d'image de l'une des images capturées par la caméra (12).

10. Système d'inspection d'espace creux selon l'une des revendications précédentes, **caractérisé en ce que** l'unité d'inspection (4) présente au moins un outil de traitement (22) et le dispositif de commande (10) est conçu pour la commande de cet outil de traitement (22), de préférence en fonction d'une structure (24, 26, 28) reconnue par le module de reconnaissance de structures (32).

11. Système d'inspection d'espace creux selon l'une des revendications précédentes, **caractérisé en ce que** le module de reconnaissance de structures (32) est capable d'auto-apprentissage.

12. Système d'inspection d'espace creux selon l'une des revendications précédentes, **caractérisé en ce que** le module de reconnaissance de structures (32) est conçu dans un système de calcul central (40), lequel est relié en communication avec le dispositif de commande (10) et de préférence avec les dispositifs de commande (10) de plusieurs unités d'inspection (4).

13. Système d'inspection d'espace creux selon l'une des revendications précédentes, **caractérisé en ce que** le module de reconnaissance de structures (32) est relié de telle façon en communication avec un système de communication central (40), que le module de reconnaissance de structures (32) transmet des données concernant des structures reconnues au système de communication central (40) et/ou reçoit des données pour la reconnaissance de structures à partir du système de communication central (40).

14. Système d'inspection d'espace creux selon la revendication 12 ou 13, **caractérisé en ce que** le module de reconnaissance de structures (32) est relié en communication au système de communication central (40) par le biais d'un réseau de communications (38) et de préférence par le biais d'internet.

15. Système d'inspection d'espace creux selon l'une des revendications précédentes, **caractérisé en ce que** le module de reconnaissance de structures (32) est un module logiciel, lequel est exécuté sur un système informatique dans le dispositif capteur ou la caméra (12) et/ou dans l'unité d'inspection (4) et/ou dans un système informatique relié à l'unité d'inspection (10).
